# EUROPÄISCHE PATENTSCHRIFT

(11) **EP 3 262 446 B1**
(45) Veröffentlichungstag und Bekanntmachung des Hinweises auf die Patenterteilung: **26.08.2020**
(21) Anmeldenummer: 16709728.6
(22) Anmeldetag: 26.02.2016
(51) Int. Cl.: G02B 5/08, G02B 1/14

(54) **REFLEKTORELEMENT UND VERFAHREN ZU DESSEN HERSTELLUNG**
REFLECTOR ELEMENT AND PROCESS OF MANUFACTURE THEREOF
RÉFLECTEUR ET SON PROCÉDÉ DE FABRICATION

(30) Priorität: 27.02.2015 DE 102015102870
(43) Veröffentlichungstag der Anmeldung: 03.01.2018
(73) Patentinhaber: Fraunhofer-Gesellschaft zur Förderung der angewandten Forschung e.V., 80686 München (DE); SITECO GmbH, 83301 Traunreut (DE)
(72) Erfinder: SCHÜRMANN, Mark, 07743 Jena (DE); MUNZERT, Peter, 07743 Jena (DE); SALZ, Dirk, 28195 Bremen (DE); STOCKWALD, Klaus, 82110 Germering (DE); SCHAEFER, Reinhard, 89522 Heidenheim (DE); KOTTER, Stefan, 86163 Augsburg (DE); BRAUN, Paul, 86695 Nordendorf (DE)
(74) Vertreter: Schmidt, Steffen
(86) Internationale Anmeldenummer: PCT/EP2016/054132
(87) Internationale Veröffentlichungsnummer: WO 2016/135313

(56) Entgegenhaltungen:
- WO-A2-2008/104389
- US-A1- 2013 216 859
- SCHMAUDER T ET AL: "High Reflective Silver Coatings on 3D Plastic Parts for Solar Concentrators", 52TH ANNUAL TECHNICAL CONFERENCE PROCEEDINGS / SVC, SOCIETY OF VACUUM COATERS : MAY 9 - 14 2009, SANTA CLARA, CA, USA, ALBUQUERQUE, NM, 9. Mai 2009 (2009-05-09), Seiten 473-477, XP002694122,

## Beschreibung

Die Erfindung betrifft ein Reflektorelement, das insbesondere ein Kunststoffsubstrat mit einer reflektierenden Beschichtung aufweist.

Diese Patentanmeldung beansprucht die Priorität der deutschen Patentanmeldung 10 2015 102 870.0.

Das Reflektorelement kann zum Beispiel für Anwendungen in optischen Systemen, insbesondere Beleuchtungseinrichtungen, vorgesehen sein. Bei den Beleuchtungseinrichtungen kann es sich um alle Arten von Lampen, insbesondere LED-Leuchten, Scheinwerfer für die Bühnenbeleuchtung oder Automobilscheinwerfer handeln.

Bei solchen Anwendungen wird für das Reflektorelement in der Regel eine hohe Reflektivität gefordert, die sich durch eine gute Langzeitstabilität auszeichnet, um eine hohe Effizienz und lange Lebensdauer des optischen Systems zu erzielen.

Ein mit einer reflektierenden Aluminiumschicht versehenes Kunststoffsubstrat kann mit einer Schutzschicht aus einer durch Plasmapolymerisation hergestellten Silizium-organischen Verbindung (Siloxan) mit einer Dicke zwischen 50 nm und 200 nm ausreichend gegen Umwelteinflüsse geschützt werden, um eine zufriedenstellende Langzeitstabilität zu erreichen. Mit herkömmlichen reflektierenden Aluminium-Beschichtungen auf Kunststoffsubstraten kann aber lediglich eine Reflektivität von etwa 92,5 % erzielt werden.

Es ist bekannt, dass mit Beschichtungen aus Silber eine höhere Reflektivität im sichtbaren Spektralbereich erzielt werden kann. Allerdings ist eine Silberschicht unter Umwelteinflüssen nicht ausreichend langzeitstabil, selbst wenn man die Silberschicht mit einer herkömmlichen Schutzschicht versieht, wie sie bei reflektierenden Aluminium-Beschichtungen verwendet wird. Wenn man die Dicke der Siloxan-Schutzschicht auf einen Wert von mehr als 500 nm erhöhen würde, um bei der Verwendung einer Silberschicht eine bessere Langzeitstabilität zu erzielen, während die Erhöhung der Reflektivität im Vergleich Aluminium-Beschichtung nur sehr gering, und es würde sich insbesondere Reflektivität im blauen Spektralbereich vermindern.

US 2013/0216859 A1 offenbart einen Mehrschichtaufbau zur Anwendung als Spiegel/Reflektor, der fünf Schichten enthält: eine Substratschicht, eine Barriereschicht, eine metallische Reflektorschicht, eine oxidische Schicht, und eine Plasmapolymerschicht abgeschieden aus Siloxanprecursoren.

Der Erfindung liegt die Aufgabe zugrunde, ein verbessertes Reflektorelement anzugeben, das sich durch eine hohe Reflektivität im sichtbaren Spektralbereich und eine verbesserte Langzeitstabilität auszeichnet, wobei insbesondere die Reflektivität im blauen Spektralbereich möglichst nicht beeinträchtigt werden soll. Weiterhin soll ein geeignetes Verfahren zur Herstellung des Reflektorelements angegeben werden.

Diese Aufgaben werden durch ein Reflektorelement und ein Verfahren zu dessen Herstellung gemäß den unabhängigen Patentansprüchen gelöst. Vorteilhafte Ausgestaltungen und Weiterbildungen der Erfindung sind Gegenstand der abhängigen Ansprüche.

Gemäß zumindest einer Ausgestaltung umfasst das Reflektorelement ein Kunststoffsubstrat, das vorzugsweise dreidimensional geformt ist. Das Kunststoffsubstrat ist bevorzugt zumindest bereichsweise gekrümmt. Das Reflektorelement kann insbesondere zur Strahlformung der von einem Leuchtmittel emittierten Strahlung vorgesehen sein, zum Beispiel zur Kollimation oder Fokussierung der Strahlung.

Das Kunststoffsubstrat kann zum Beispiel durch Spritzgießen oder Tiefziehen in einer für die vorgesehene Anwendung geeigneten dreidimensionalen Form hergestellt werden. Vorzugsweise weist das Kunststoffsubstrat einen thermoplastischen Kunststoff auf. Weiterhin sind auch spritzgiessbare Duroplaste geeignet, die sich durch eine gute Formbeständigkeit auszeichnen.

Das Kunststoffsubstrat kann insbesondere PC (Polycarbonat), PMMA (Polymethylmethacrylat) oder PBT (Polybutylenterephthalat) aufweisen. Der Kunststoff wie zum Beispiel Polycarbonat kann Beimischungen eines weiteren Kunststoffs wie zum Beispiel ABS aufweisen. Weiterhin ist es möglich, dass der Kunststoff Zusatzstoffe wie zum Beispiel Pigmente, oxidische oder nitridische Füllmaterialien (Pulver oder Fasern) aufweist, um zum Beispiel einen gewünschten Farbeindruck, eine erhöhte Wärmeleitfähigkeit oder eine Verringerung des thermischen Ausdehnungskoeffizienten zur Verbesserung der Wärmeformbeständigkeit der dreidimensionalen Form zu bewirken. Der thermische Ausdehnungskoeffizient des Kunststoffsubstrats kann zum Beispiel zwischen 30 ^{∗} 10⁻⁶ K⁻¹ und 100 ^{∗} 10⁻⁶ K⁻¹ betragen.

Das Kunststoffsubstrat weist vorteilhaft zumindest bereichsweise eine Oberflächenrauheit von weniger als 20 nm, bevorzugt von weniger als 15 nm, besonders bevorzugt von weniger als 5 nm auf, um eine hohe spekulare Reflexion zu erzielen. Es ist auch möglich, dass einzelne Zonen des Kunststoffsubstrats zu Erzielung einer diffusen Streuung eine höhere Rauheit im µm-Bereich aufweisen.

Das Kunststoffsubstrat weist eine Dicke von bevorzugt mindestens 10 µm auf, wobei die Dicke für eine formstabile dreidimensionale Form des Reflektorelements vorzugsweise mindestens 500 µm, insbesondere von 500 µm bis 2000 µm, beträgt.

Weiterhin weist das Reflektorelement als reflektierende Schicht eine Silberschicht auf, die über dem Kunststoffsubstrat angeordnet ist. "Über dem Kunststoffsubstrat angeordnet" bedeutet in diesem Zusammenhang, dass die Silberschicht entweder unmittelbar an das Kunststoffsubstrat angrenzt, oder dass alternativ mindestens eine Zwischenschicht zwischen dem Kunststoffsubstrat und der Silberschicht angeordnet ist. Die Silberschicht weist bevorzugt eine Dicke von mindestens 35 nm, besonders bevorzugt zwischen 100 nm und 200 nm, auf. Die Silberschicht kann zum Beispiel durch Aufdampfen oder Sputtern aufgebracht werden.

Über der Silberschicht ist vorteilhaft eine erste Barriereschicht angeordnet, die vorzugsweise eine Oxidschicht ist. Die erste Barriereschicht grenzt vorzugsweise unmittelbar an die Silberschicht an. Insbesondere kann die erste Barriereschicht ein Oxid von mindestens einem der Materialien Al, Si, Y oder Ti aufweisen. Die erste Barriereschicht weist bevorzugt eine Dicke von mindestens 15 nm auf.

Über der ersten Barriereschicht ist eine zweite Barriereschicht angeordnet, welche bevorzugt unmittelbar an die erste Barriereschicht angrenzt. Die zweite Barriereschicht weist vorteilhaft ein Siloxan auf. Gemäß einer bevorzugten Ausgestaltung ist die zweite Barriereschicht mindestens 250 nm und höchstens 450 nm dick. Die zweite Barriereschicht ist vorteilhaft die äußerste Schicht des Reflektorelements, d.h. es sind keine weiteren Schichten über der zweiten Barriereschicht angeordnet.

Es hat sich herausgestellt, dass durch die hier beschriebene Kombination aus der mindestens 15 nm dicken Oxidschicht als erste Barriereschicht und der mindestens 250 nm dicken Siloxanschicht als zweite Barriereschicht ein Schutz der Silberschicht erzielt wird, welcher eine hohe Reflektivität über lange Zeiträume auch unter schwierigen klimatischen Bedingungen sicherstellt. Insbesondere wird eine gute Beständigkeit bei Temperaturwechsel-Belastungen und/oder unter dem Einfluss von Feuchtigkeit erzielt. Vorzugsweise beträgt die Reflektivität mehr als 93,5 %.

Dadurch, dass die zweite Barriereschicht nicht mehr als 450 nm dick ist und insbesondere die äußerste Schicht des Reflektorelement ist, wird vorteilhaft eine Schwächung des Blauanteils der reflektierten Strahlung durch Absorption vermindert, welche bei einer dickeren zweiten Barriereschicht und/oder beim Aufbringen einer weiteren Schicht als Deckschicht auftreten kann. Eine Gelbfärbung des reflektierten Lichts, welche durch teilweise Absorption des Blauanteils in der Barriereschicht entstehen könnte, wird auf diese Weise vorteilhaft vermindert.

Die zweite Barriereschicht ist vorteilhaft die oberste Schicht des Reflektorelements. Durch die Dicke der zweiten Barriereschicht von mindestens 250 nm wird ein besonders guter Schutz gegen Umweltbelastungen erzielt, ohne dass eine weitere Deckschicht verwendet wird, welche die optischen Eigenschaften des Reflektorelements beeinträchtigen könnte.

Bei einer bevorzugten Ausgestaltung enthält die erste Barriereschicht Aluminiumoxid, Siliziumoxid oder Yttriumoxid. Insbesondere kann die erste Barriereschicht Al₂O₃, SiO₂ oder Y₂O₃ aufweisen oder daraus bestehen. Aufgrund des vergleichsweise geringen Brechungsindex ist ein Siliziumoxid wie zum Beispiel SiO₂ besonders gut geeignet, wenn die Reflexion der unterhalb der ersten Barriereschicht angeordneten Silberschicht insbesondere im blauen Spektralbereich möglichst wenig beeinträchtigt werden soll.

Die Dicke der ersten Barriereschicht wird vorteilhaft so gewählt, dass einerseits eine ausreichende Schutzwirkung erzielt wird, aber andererseits die optischen Eigenschaften so wenig wie möglich beeinträchtigt werden. Die erste Barriereschicht weist vorteilhaft eine Dicke zwischen 15 nm und 150 nm auf. Für die optischen Eigenschaften, insbesondere eine hohe Transmission, ist es vorteilhaft, wenn die erste Barriereschicht nicht mehr als 60 nm dick ist. Besonders bevorzugt beträgt die Dicke der ersten Barriereschicht zwischen 40 nm und 60 nm.

Bei einer vorteilhaften Ausgestaltung ist zwischen dem Kunststoffsubstrat und der Silberschicht eine metallische Zwischenschicht angeordnet. Die metallische Zwischenschicht weist bevorzugt mindestens eines der Metalle Chrom, Kupfer, Nickel oder Titan auf oder besteht aus einem dieser Metalle. Besonders bevorzugt wird Chrom verwendet. Die Dicke der metallischen Zwischenschicht beträgt vorteilhaft 15 nm bis 75 nm, bevorzugt nicht mehr als 50 nm. Beispielsweise kann die metallische Zwischenschicht etwa 30 nm dick sein.

Die metallische Zwischenschicht hat den Vorteil, dass sie als Haftvermittlerschicht zwischen dem Kunststoffsubstrat und der Silberschicht wirkt und auf diese Weise die Beständigkeit des Reflektorelements gegenüber thermo-mechanischen Belastungen erhöht. Weiterhin kann die metallische Zwischenschicht Unebenheiten der Oberfläche des Kunststoffsubstrats im Bereich bis zu etwa 15 nm ausgleichen und auf diese Weise die resultierende Reflektivität der nachfolgenden Silberschicht verbessern. Weiterhin kann die Zwischenschicht als Diffusionsbarriere für Gase wie zum Beispiel Wasserdampf und/oder Sauerstoff wirken, welche ansonsten aus dem Kunststoffsubstrat zur reflektierenden Silberschicht hin diffundieren und auf diese Weise eine Degradation der Silberschicht bewirken könnten.

Es hat sich herausgestellt, dass ein Zusammenhang zwischen den Absorptionseigenschaften der zweiten Barriereschicht im infraroten Spektralbereich und den optischen Eigenschaften im visuellen Spektralbereich besteht. Die vorzugsweise mittels Plasmapolymerisation hergestellte zweite Barriereschicht kann insbesondere durch FTIR- Absorptionsspektroskopie charakterisiert werden.

Bei einer bevorzugten Ausgestaltung beträgt eine integrale IR-Absorption der zweiten Barriereschicht im Wellenzahlbereich von 850 cm⁻¹ bis 950 cm⁻¹ weniger als 65 % der integralen IR-Absorption im Wellenzahlbereich von 1000 cm⁻¹ bis 1100 cm⁻¹. Im Wellenzahlbereich von 850 cm⁻¹ bis 950 cm⁻¹ tritt insbesondere eine Absorption von gering vernetzten Si-CH₃-Gruppen und Si-O-Gruppen auf, während im Wellenzahlbereich von 1000 cm⁻¹ bis 1100 cm⁻¹ die Absorption wesentlich von O-Si-O Bindungen bestimmt wird.

Es wurde herausgefunden, dass das Verhältnis der integralen IR-Absorption im Wellenzahlbereich von 850 cm⁻¹ bis 950 cm⁻¹ zur integralen IR-Absorption im Wellenzahlbereich von 1000 cm⁻¹ bis 1100 cm⁻¹ mit der Differenz aus der mittleren Reflektivität Rᵥᵢₛ im sichtbaren Spektralbereich von 420 nm bis 760 nm und der mittleren Reflektivität R_{blue} im blauen Spektralbereich von 420 nm bis 480 nm korreliert. Es hat sich gezeigt, dass eine Differenz aus der mittleren Reflektivität Rᵥᵢₛ im sichtbaren Spektralbereich von 420 nm bis 760 nm und der mittleren Reflektivität R_{blue} im blauen Spektralbereich von 420 nm bis 480 nm von weniger als 1,5% erzielt werden kann, wenn die integrale IR-Absorption der zweiten Barriereschicht im Wellenzahlbereich von 850 cm⁻¹ bis 950 cm⁻¹ weniger als 65 % der integralen IR-Absorption im Wellenzahlbereich von 1000 cm⁻¹ bis 1100 cm⁻¹ beträgt. Mit anderen Worten ist die mittlere Reflektivität R_{b} im blauen Spektralbereich von 420 nm bis 480 nm um nicht mehr als 1,5 % kleiner als die mittlere Reflektivität im sichtbaren Spektralbereich von 420 nm bis 760 nm. In diesem Fall zeichnet sich das Reflektorelement insbesondere dadurch aus, dass die reflektierte Strahlung keine Gelbfärbung aufweist.

Die strukturellen Eigenschaften und das daraus resultierende Infrarotspektrum der zweiten Barriereschicht können durch die Wachstumsbedingungen beim Aufwachsen beeinflusst werden. Die als zweite Barriereschicht dienende Siloxanschicht kann durch ein PECVD-Verfahren, insbesondere durch Plasmapolymerisation einer siliziumorganischen Verbindung hergestellt werden. Die Qualität dieser Schicht und das daraus resultierende Infrarotspektrum können durch die Prozessführung der Plasmapolymerisation, insbesondere die Monomerzusammensetzung, die Plasmaleistung, die Beimischung von Sauerstoff und/oder den Temperaturverlauf des Substrats beeinflusst werden.

Die Prozessbedingungen bei der Plasmapolymerisation erlauben die Einstellung verschiedener Eigenschaften der Siloxanschicht, insbesondere der Barrierewirkung gegenüber Wasser- und Gasdiffusion, der optischen Transparenz im blauen Spektralbereich (Gelbfärbung), mechanischer Eigenschaften wie insbesondere der Elastizitätsbereich zur Vermeidung von Rissbildung bei unterschiedlicher Ausdehnung des Substrats und der Schichtmaterialien, sowie der Oberflächenenergie, zum Beispiel der Kontaktwinkel für Wasser zur Einstellung einer hydrophoben Oberflächencharakteristik.

Das Verfahren zur Herstellung des Reflektorelements umfasst gemäß zumindest einer Ausgestaltung das Bereitstellen eines Kunststoffsubstrats, das vorzugsweise dreidimensional geformt ist, das Aufbringen einer Silberschicht, das Aufbringen einer ersten Barriereschicht, die eine mindestens 15 nm dicke Oxidschicht ist, durch ein PVD-Verfahren, und das Aufbringen einer zweiten Barriereschicht durch ein CVD-Verfahren, wobei die zweite Barriereschicht eine Siloxanschicht ist, die eine Dicke von mindestens 250 nm und höchstens 450 nm aufweist und vorzugsweise die äußerste Schicht des Reflektorelements ist.

Das Aufbringen der ersten Barriereschicht erfolgt bevorzugt durch ein Sputterverfahren, insbesondere durch reaktives Sputtern in einem Sauerstoffplasma. Beispielsweise werden Targets aus Aluminium, Silizium, Titan oder Yttrium verwendet und durch Sputtern in einem Sauerstoffplasma eine Aluminiumoxidschicht, eine Siliziumoxidschicht, eine Titandioxidschicht oder eine Yttriumoxidschicht erzeugt.

Die zweite Barriereschicht wird bevorzugt durch Plasmapolymerisation einer siliziumorganischen Verbindung hergestellt. Die siliziumorganische Verbindung kann insbesondere Hexamethyldisiloxan (HMDSO) oder Tetramethyldisiloxan (TMDSO) aufweisen.

Weitere vorteilhafte Ausgestaltungen des Verfahrens ergeben sich aus der Beschreibung des Reflektorelements und umgekehrt.

Die Erfindung wird im Folgenden anhand von Ausführungsbeispielen im Zusammenhang mit den Figuren 1 bis 5 näher erläutert.

Es zeigen:
Figur 1 eine schematische Darstellung eines Querschnitts durch ein Reflektorelement gemäß einem Ausführungsbeispiel,
Figuren 2 bis 4 eine grafische Darstellung von FTIR-Absorptionsspektren von drei verschiedenen Ausführungsbeispielen des Reflektorelements, und
Figur 5 eine grafische Darstellung der Differenz zwischen der mittleren Reflektivität im gesamten visuellen Spektralbereich zur Reflektivität im blauen Spektralbereich in Abhängigkeit von dem Quotienten aus der FTIR-Absorption im Wellenzahlbereich 850 cm⁻¹...950 cm⁻¹ und der FTIR-Absorption im Wellenzahlbereich 1000 cm⁻¹...1100 cm⁻¹.

Die dargestellten Bestandteile sowie die Größenverhältnisse der Bestandteile untereinander sind nicht als maßstabsgerecht anzusehen.

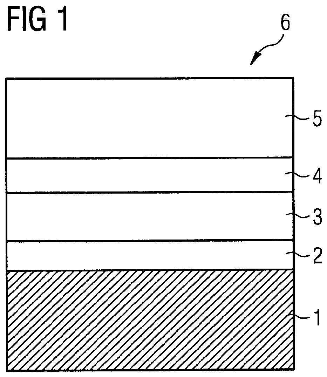

Das in Figur 1 schematisch im Querschnitt dargestellte Reflektorelement 6 wird durch eine auf ein Substrat 1 aufgebrachte Schichtenfolge gebildet. Zur Vereinfachung ist das Substrat 1 hier als ebenes Substrat dargestellt. Das Substrat 1 kann bei dem Reflektorelement 6 aber insbesondere ein gekrümmtes Substrat sein. Das Substrat kann zum Beispiel durch ein formgebendes Verfahren wie Spritzgießen oder Tiefziehen hergestellt sein und eine beliebige dreidimensionale Form aufweisen. Insbesondere kann das Substrat 1 eine für eine optische Anwendung vorgesehene und zumindest bereichsweise gekrümmte Oberflächenform aufweisen. Die Oberflächenrauheit des Substrats 1 beträgt vorteilhaft weniger als 15 nm, besonders bevorzugt weniger als 5 nm.

Das Material des Substrats 1 ist bevorzugt ein Kunststoff, insbesondere ein thermoplastischer Kunststoff oder ein duroplastischer Kunststoff. Das Substrat 1 kann insbesondere PC (Polycarbonat), PMMA (Polymethylmethacrylat) oder PBT (Polybutylenterephthalat) enthalten. Dem Kunststoff kann gegebenenfalls ein Zusatzstoff beigemischt sein, wie zum Beispiel ABS (Acrylnitril-Butadien-Styrol). Weiterhin ist es möglich, dass dem Kunststoff Pigmente wie zum Beispiel TiO₂-Partikel zugefügt sind, um zum Beispiel den Farbeindruck oder die Wärmeleitfähigkeit des Substratmaterials zu beeinflussen.

Bei dem Ausführungsbeispiel ist zwischen dem Substrat 1 und einer darüber angeordneten Silberschicht 3, die als Reflektorschicht fungiert, eine Zwischenschicht 2 angeordnet. Die Zwischenschicht 2 kann insbesondere die Funktion einer Haftvermittlerschicht aufweisen und ist vorzugsweise eine metallische Schicht, die insbesondere Chrom, Kupfer, Titan oder Nickel aufweist oder daraus besteht. Besonders bevorzugt wird Chrom oder Kupfer verwendet. Die Zwischenschicht 2 kann vorteilhaft auch zur Glättung der Substratoberfläche beitragen und/oder als Diffusionsbarriere für Stoffe wirken, welche aus dem Substrat (zum Beispiel geringe Mengen von Wasser und/oder Sauerstoff) in Richtung zur Silberschicht 3 hin diffundieren könnten. Die Zwischenschicht ist bevorzugt 15 nm bis 75 nm, beispielsweise 30 nm dick. Die Zwischenschicht kann zum Beispiel durch Sputtern aufgebracht werden.

Die als Reflektorschicht wirkende Silberschicht 3 ist etwa 100 nm bis 200 nm, bevorzugt 150 nm bis 200 nm, dick. Die Silberschicht 3 wird bevorzugt durch Sputtern aufgebracht. Durch die Verwendung von Silber als Material für die Reflektorschicht wird vorteilhaft eine besonders hohe Reflexion im sichtbaren Spektralbereich erzielt.

Zum Schutz der Silberschicht 3 vor Umwelteinflüssen, insbesondere Temperaturwechselbelastungen und Feuchtigkeit, ist bei dem Reflektorelement 6 eine Kombination aus einer ersten Barriereschicht 4 und einer zweiten Barriereschicht 5 angeordnet. Die erste Barriereschicht 4 ist vorteilhaft eine Oxidschicht, die zum Beispiel zwischen 15 nm und 150 nm dick ist. Im Hinblick auf die optischen Eigenschaften ist es vorteilhaft, wenn die erste Barriereschicht 4 weniger als 60 nm, zum Beispiel zwischen 40 nm und 60 nm dick ist. Bevorzugte Materialien für die erste Barriereschicht 4 sind SiO₂ und Al₂O₃. Die erste Barriereschicht 4 wird beispielsweise durch reaktives Sputtern aufgebracht.

Zur Erzielung der erwünschten Langzeitstabilität ist bei dem Reflektorelement 6 über der ersten Barriereschicht 4 eine zweite Barriereschicht 5 angeordnet. Die zweite Barriereschicht 5 kann insbesondere durch plasmagestützte chemische Gasphasenabscheidung (PEVCD) hergestellt werden. Bei der zweiten Barriereschicht 5 handelt es sich vorzugsweise um eine Siloxanschicht, die insbesondere durch Plasmapolymerisation von HMDSO (Hexamethyldisiloxan) oder die TMDSO (Tetramethyldisiloxan) oder Mischungen aus diesen oder anderen silizium-organischen Verbindungen aufgebracht wird.

Besonders vorteilhaft für die Langzeitstabilität einerseits und die optischen Eigenschaften andererseits ist es, wenn die Dicke der zweiten Barriereschicht 5 zwischen einschließlich 250 nm und einschließlich 450 nm beträgt. Bei einer Dicke von vorzugsweise mindestens 250 nm wird eine besonders gute Barrierewirkung gegenüber Wasser-und Gasdiffusion erzielt. Weiterhin ist eine Dicke von höchstens 450 nm vorteilhaft, um insbesondere die Absorption der zweiten Barriereschicht 5 gering zu halten. Bei einer größeren Schichtdicke als 450 nm würde insbesondere die Absorption bei kurzen Wellenlängen signifikant zunehmen und somit die optische Transparenz für blaues Licht herabsetzen. Durch eine erhöhte Absorption bei kurzen Wellenlängen, insbesondere im Bereich des blauen Lichts, könnte daher ein gelblicher Farbeindruck der reflektierten Strahlung auftreten, wenn die Schichtdicke der zweiten Barriereschicht 5 zu groß gewählt wird.

Die zweite Barriereschicht 5 ist vorzugsweise die äußerste Schicht auf der vom Substrat abgewandten Seite des Reflektorelements 6. Dies ist deshalb vorteilhaft, weil die zuvor erwähnten Absorptionseffekte, die beim Aufbringen einer zu dicken zweiten Barriereschicht 5 auftreten könnten, insbesondere auch beim Aufbringen weiterer Schichten auf die zweite Barriereschicht 5 auftreten würden.

Weiterhin ist es von Vorteil, dass die zweite Barriereschicht 5 die äußerste Schicht ist, weil auf diese Weise hydrophobe Oberflächeneigenschaften erzielt werden können. Die Verwendung einer Siloxanschicht für die zweite Barriereschicht 5 hat unter anderem den Vorteil, dass dieses Material hydrophobe Oberflächeneigenschaften aufweist. Die Moleküle der Siloxanschicht weisen ein stabiles Si-O-Si-Gerüst auf, an dem pro Si-Atom im statistischen Mittel etwa 1,5 Methylgruppen gebunden sind. Die Anwesenheit dieser Gruppen bewirkt die hydrophoben Eigenschaften der Oberfläche. Wenn die zweite Barriereschicht 5 in Form einer Siloxanschicht die äußerste Schicht des Reflektorelements 6 ist, wirkt die Oberfläche des Reflektorelements deshalb vorteilhaft wasserabweisend.

Die Qualität der zweiten Barriereschicht 5 kann durch die Prozessführung der Plasmapolymerisation bzgl. Monomerzusammensetzung, Plasmaleistung, O₂-Zumischung und Temperaturverlauf des Substrates eingestellt werden und kann bzgl. der Strukturzusammensetzung unter anderem über das FTIR-Absorptions-Spektrum charakterisiert werden. Die Prozessbedingungen erlauben die Einstellung verschiedener Eigenschaften der Siloxanschicht, insbesondere die Barrierewirkung gegenüber Wasser- und Gasdiffusion, die optische Transparenz im Blauen (Gelbfärbung), die mechanischen Eigenschaften oder die Oberflächenenergie zur Einstellung einer hydrophober Oberflächencharakteristik.

Die oberste Siloxanschicht ist insbesondere elastisch und zeichnet sich durch eine stark polymerartige Struktur aus, die sich im FTIR-Spektrum durch eine breite stark ausgeprägte Absorption im Bereich 3000 cm⁻¹ -3600 cm⁻¹, eine starke Si-O-Bande um 1100 cm⁻¹ und hohe Absorptionsniveaus im Bereich zwischen der Si-O Bande (∼1100 cm⁻¹) und 600 cm⁻¹, insbesondere im Bereich zwischen 850 cm⁻¹ und 950 cm⁻¹ durch hohe Anteile von Si-(CH3) Molekülbindungen, auszeichnet. Die Abscheidebedingungen der Siloxanschicht werden durch die Prozessführung vorzugsweise derart angepasst, dass die breitbandige FTIR Absorption im Wellenzahl-Bereich von 600-1000 cm⁻¹ verringert wird. Es zeigt sich, dass auf diese Weise die Barriereneigenschaften und die Transmission im blauen Spektralbereich verbessert werden, wobei die Elastizität der Siloxanschicht für die Erreichung der Langzeitbeständigkeit beibehalten wird.

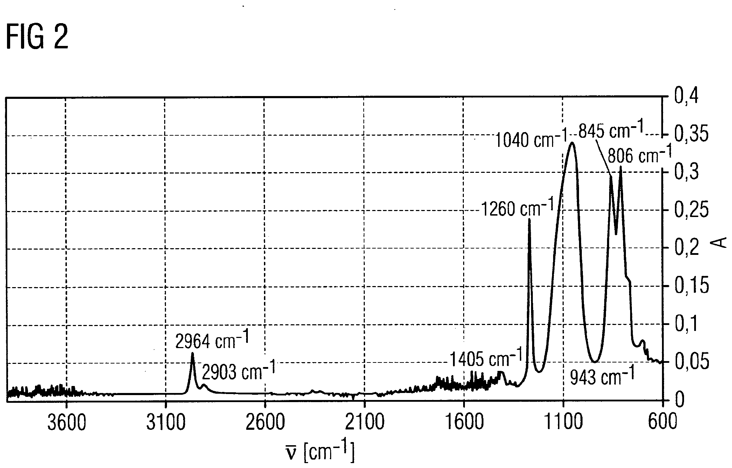

Die FTIR-Absorptionsspektren von drei Ausführungsbeispielen des Reflektorelements 6 sind in den Figuren 2, 3 und 4 dargestellt. Das Reflektorelement 6 mit dem FTIR-Absorptionsspektrum gemäß Figur 2 weist ein Substrat 1 aus Polycarbonat, eine metallische Zwischenschicht aus Cu mit einer Dicke von etwa 30 nm, eine reflektierende Silberschicht 3 mit einer Dicke von etwa 150 nm bis 220 nm, eine erste Barriereschicht 4 aus SiO₂ mit einer Dicke von etwa 90 nm und eine zweite Barriereschicht 5 aus Siloxan mit einer Dicke von etwa 310 nm auf.

Die Herstellung der Siloxanschicht erfolgte bei dem Ausführungsbeispiel nach dem Beschichten eines Reflektor-Substratkörpers 1 mit Cu, Ag und SiO₂ in einer Plasmapolymerisations-Beschichtungsanlage (Typ Nano der Fa. Diener electronics). Ein Gasverteilersystem ist dabei in einer planaren Beschichtungselektrode vom isoliert über der Masseelektrode angeordneten Substrat in 75 mm Entfernung vom Substrat angebracht. Das System hat eine Elektrodenfläche von 100 x 100 mm und eine wirksame Plasmaleistung von 280 W bei der Betriebsfrequenz 13,56 MHz. In einem ersten Schritt erfolgte für 1 Minute eine Vorbehandlung durch Plasmabeglimmung im Argon-Plasma mit 280 W RF-Leistung bei einem Gesamtdruck von p = 0,2 mbar in der Plasmaanlage. Darauf folgten 5 Minuten Beschichtungsdauer, wobei HMDSO mit einer Flussrate von 10 sccm eingelassen wurde, und weitere 4 Minuten Beschichtungsverfahren, in denen sowohl HMDSO mit einer Flussrate 10 sccm als auch O₂ mit einer Flussrate von 40 sccm eingelassen wurden. Bei den Beschichtungsschritten betrug der Gesamtdruck in der Plasmaanlage weiterhin p = 0,2 mbar.

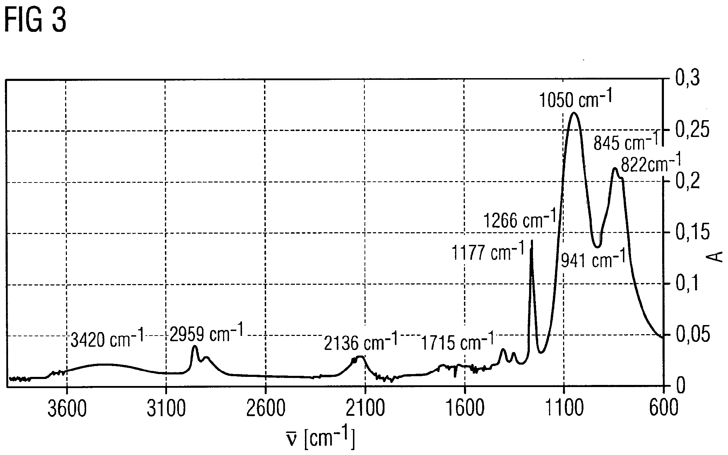

Ein weiteres Ausführungsbeispiel, dessen FTIR-Absorptionsspektrum in Figur 3 dargestellt ist, unterscheidet sich von dem Ausführungsbeispiel der Figur 2 dadurch, dass für das Material der metallischen Zwischenschicht 2 Chrom anstelle von Kupfer eingesetzt wurde.

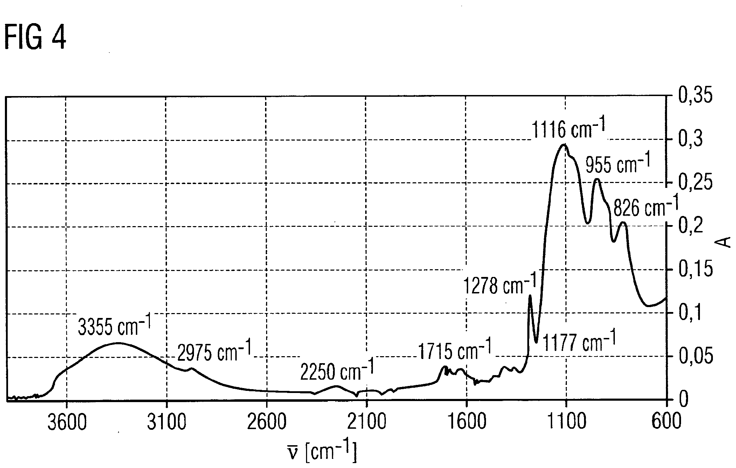

Das weitere Ausführungsbeispiel, dessen FTIR-Absorptionsspektrum in Figur 4 dargestellt ist, unterscheidet sich von den beiden vorherigen Ausführungsbeispielen dadurch, dass zwischen dem Substrat 1 und der Silberschicht 3 keine metallische Zwischenschicht angeordnet wurde. Weiterhin unterscheidet sich das Ausführungsbeispiel der Figur 4 dadurch von den vorherigen Ausführungsbeispielen, dass die erste Barriereschicht 4 Al₂O₃ anstelle von SiO₂ aufweist.

Es zeigt sich, dass bei verschiedenen Ausführungsbeispielen von Reflektorelementen in Abhängigkeit von den verwendeten Schichtmaterialien, Schichtdicken und Wachstumsbedingungen Unterschiede in den FTIR-Absorptionsspektren auftreten.

Hierbei wurde ein Zusammenhang zwischen den FTIR-Absorptionseigenschaften und den optischen Eigenschaften festgestellt. Die integrale FTIR-Absorption der O-Si-O Bindung im Bereich 1100 cm⁻¹ bis 1000 cm⁻¹ kann ins Verhältnis zur Absorption im Bereich 950 cm⁻¹ bis 850 cm⁻¹, in der die Absorption von eingebauten, gering vernetzten Si-CH₃ und Si-O-Gruppen auftritt, gesetzt werden. Dieses Verhältnis A (850cm⁻¹...950cm⁻¹) /A(1000 cm⁻¹...1100 cm⁻¹) / zeigt eine Korrelation zur Differenz ΔR_{vis-blue} = Rᵥᵢₛ (420 nm-760 nm) - R_{blue} (420 nm -480 nm) aus der über den visuellen Spektralbereich von 420 nm bis 760 nm gemittelten Reflektivität Rᵥᵢₛ und der über den blauen Spektralbereich von 420 nm -480 nm gemittelten Reflektivität R_{blue}.

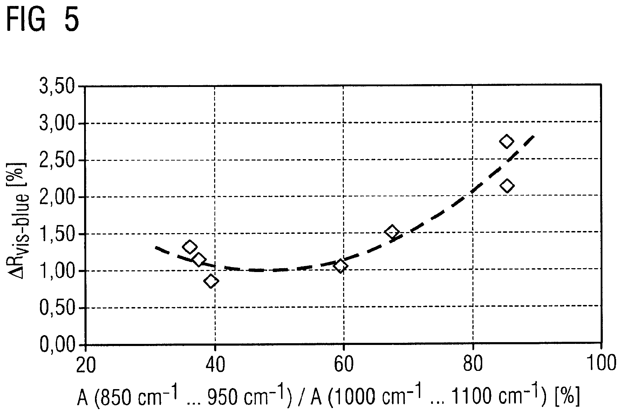

Diese Korrelation ist in Figur 5 dargestellt. Liegt das FTIR-Absorptionsverhältnis unter 65%, ist die Reduktion der Blau-Reflektivität gegenüber der mittleren visuellen Reflektivität kleiner als 1.5%. Wird das FTIR-Absorptionsverhältnis größer als 75%, so beträgt die Reduktion der Blau-Reflektivität gegenüber der visuellen Reflektivität über 2%. In diesem Fall zeigt das reflektierte Licht eine erhöhte Gelbfärbung. Zur Vermeidung einer solchen Gelbfärbung werden daher die Schichtdicken, Materialien und Wachstumsbedingungen so eingestellt, dass das FTIR-Absorptionsverhältnis weniger als 65% beträgt.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Reflektorelement (6), umfassend:
- ein Kunststoffsubstrat (1),
- eine Silberschicht (3),
- eine über der Silberschicht (3) angeordnete erste Barriereschicht (4), die eine mindestens 15 nm dicke Oxidschicht ist, und
- eine über der ersten Barriereschicht (4) angeordnete zweite Barriereschicht (5), die ein Siloxan aufweist, wobei die Dicke der zweiten Barriereschicht (5) mindestens 250 nm und höchstens 450 nm beträgt.

2. Reflektorelement nach Anspruch 1,
wobei die zweite Barriereschicht (5) die oberste Schicht des Reflektorelements (6) ist.

3. Reflektorelement nach einem der vorhergehenden Ansprüche,
wobei die erste Barriereschicht (4) Aluminiumoxid, Siliziumoxid, Titanoxid oder Yttriumoxid aufweist.

4. Reflektorelement nach einem der vorhergehenden Ansprüche,
wobei die erste Barriereschicht (4) eine Dicke zwischen 15 nm und 150 nm aufweist.

5. Reflektorelement nach einem der vorhergehenden Ansprüche, wobei die erste Barriereschicht (4) eine Dicke weniger als 60 nm aufweist.

6. Reflektorelement nach einem der vorhergehenden Ansprüche,
wobei zwischen dem Kunststoffsubstrat (1) und der Silberschicht (3) eine metallische Zwischenschicht (2) angeordnet ist.

7. Reflektorelement nach Anspruch 6,
wobei die metallische Zwischenschicht (2) Cr, Cu, Ni oder Ti aufweist.

8. Reflektorelement nach einem der vorhergehenden Ansprüche,
wobei eine integrale IR-Absorption der zweiten Barriereschicht (5) im Wellenzahlbereich von 850 cm⁻¹ bis 950 cm⁻¹ weniger als 65 % der integralen IR-Absorption im Wellenzahlbereich von 1000 cm⁻¹ bis 1100 cm⁻¹ beträgt.

9. Reflektorelement nach einem der vorhergehenden Ansprüche,
wobei das Reflektorelement (6) im Wellenlängenbereich von 420 nm bis 480 nm eine mittlere Reflektivität R_{blue} und im Wellenlängenbereich von 420 nm bis 760 nm eine mittlere Reflektivität Rᵥᵢₛ aufweist, wobei ΔR_{vis-blue} = Rᵥᵢₛ - R_{blue} ≤ 1,5% ist.

10. Verfahren zur Herstellung eines Reflektorelements (6), umfassend die Schritte:
- Bereitstellen eines Kunststoffsubstrats (1),
- Aufbringen einer Silberschicht (3),
- Aufbringen einer ersten Barriereschicht (4) durch ein PVD-Verfahren, wobei die erste Barriereschicht (4) eine mindestens 15 nm dick Oxidschicht ist, und
- Aufbringen einer zweiten Barriereschicht (5), die ein Siloxan aufweist, durch ein CVD-Verfahren, wobei die zweite Barriereschicht (5) eine Dicke von mindestens 250 nm und höchstens 450 nm aufweist.

11. Verfahren nach Anspruch 10,
wobei die zweite Barriereschicht (5) die äußerste Schicht des Reflektorelements (6) ist.

12. Verfahren nach Anspruch 10 oder 11,
wobei die erste Barriereschicht (4) durch ein Sputterverfahren aufgebracht wird.

13. Verfahren nach einem der Ansprüche 10 bis 12,
wobei die erste Barriereschicht (4) ein Oxid von mindestens einem der Elemente Al, Si, Ti oder Y aufweist.

14. Verfahren nach eine der Ansprüche 10 bis 13,
wobei die zweite Barriereschicht (5) durch Plasmapolymerisation einer siliziumorganischen Verbindung hergestellt wird.

15. Verfahren nach Anspruch 14,
wobei die siliziumorganische Verbindung Hexamethyldisiloxan (HMDSO) oder Tetramethyldisiloxan (TMDSO) ist.

## Claims

1. Reflector element (6) comprising:
- a plastic substrate (1),
- a silver layer (3),
- a first barrier layer (4) disposed over the silver layer (3), which is an oxide layer at least 15 nm thick, and
- a second barrier layer (5) disposed over the first barrier layer (4) and comprising a siloxane, wherein the thickness of the second barrier layer (5) is at least 250 nm and at most 450 nm.

2. The reflector element according to claim 1,
wherein the second barrier layer (5) is the uppermost layer of the reflector element (6).

3. The reflector element according to any of the foregoing claims,
wherein the first barrier layer (4) comprises aluminum oxide, silicon oxide, titanium oxide or yttrium oxide.

4. The reflector element according to any of the foregoing claims,
wherein the first barrier layer (4) has a thickness between 15 nm and 150 nm.

5. The reflector element according to any of the foregoing claims,
wherein the first barrier layer (4) has a thickness less than 60 nm.

6. The reflector element according to any of the foregoing claims,
wherein a metallic intermediate layer (2) is arranged between the plastic substrate (1) and the silver layer (3).

7. The reflector element according to claim 6,
wherein the metallic interlayer (2) comprises Cr, Cu, Ni or Ti.

8. The reflector element according to any of the foregoing claims,
wherein an integral IR absorption of the second barrier layer (5) in the wavenumber range from 850 cm⁻¹ to 950 cm⁻¹ is less than 65% of the integral IR absorption in the wavenumber range from 1000 cm⁻¹ to 1100 cm⁻¹.

9. The reflector element according to any of the foregoing claims,
wherein the reflector element (6) has an average reflectivity R_{blue} in the wavelength range from 420 nm to 480 nm and an average reflectivity Rᵥᵢₛ in the wavelength range from 420 nm to 760 nm, wherein ΔR_{vis-blue} = Rᵥᵢₛ - R_{blue} ≤ 1.5%.

10. A method of manufacturing a reflector element (6) comprising the steps of:
- providing a plastic substrate (1),
- applying of a silver layer (3)
- applying of a first barrier layer (4) by a PVD process, wherein the first barrier layer (4) is an oxide layer at least 15 nm thick, and
- applying of a second barrier layer (5) comprising a siloxane by a CVD process, wherein the second barrier layer (5) has a thickness of at least 250 nm and at most 450 nm.

11. The method according to claim 10,
wherein the second barrier layer (5) is the outermost layer of the reflector element (6).

12. The method according to claim 10 or 11,
wherein the first barrier layer (4) is applied by a sputtering process.

13. A process according to any one of claims 10 to 12,
wherein the first barrier layer (4) comprises an oxide of at least one of the elements Al, Si, Ti or Y.

14. The process according to any one of claims 10 to 13,
wherein the second barrier layer (5) is prepared by plasma polymerization of an organosilicon compound.

15. The process according to claim 14,
wherein the organosilicon compound is hexamethyldisiloxane (HMDSO) or tetramethyldisiloxane (TMDSO).

## Revendications

1. Elément réflecteur (6), comprenant
- un substrat en plastique (1),
- une couche d'argent (3),
- une première couche barrière (4) disposée sur la couche d'argent (3) et constituée d'une couche d'oxyde d'au moins 15 nm d'épaisseur, et
- une deuxième couche barrière (5) disposée sur la première couche barrière (4) et comportant un siloxane, l'épaisseur de la deuxième couche barrière (5) étant au moins égale à 250 nm et au plus égale à 450 nm.

2. Elément réflecteur selon la revendication 1,
la deuxième couche barrière (5) étant la couche supérieure de l'élément réflecteur (6).

3. Elément réflecteur selon l'une des revendications précédentes,
la première couche barrière (4) comportant de l'oxyde d'aluminium, de l'oxyde de silicium, de l'oxyde de titane ou de l'oxyde d'yttrium.

4. Elément réflecteur selon l'une des revendications précédentes,
la première couche barrière (4) présentant une épaisseur entre 15 nm et 150 nm.

5. Elément réflecteur selon l'une des revendications précédentes,
la première couche barrière (4) présentant une épaisseur inférieure à 60 nm.

6. Elément réflecteur selon l'une des revendications précédentes,
une couche intermédiaire (2) métallique étant disposée entre le substrat en plastique (1) et la couche d'argent (3).

7. Elément réflecteur selon la revendication 6,
la couche intermédiaire (2) métallique comportant Cr, Cu, Ni ou Ti.

8. Elément réflecteur selon l'une des revendications précédentes,
une absorption IR intégrale de la deuxième couche barrière (5) dans la plage de nombre d'onde de 850 cm⁻¹ à 950 cm⁻¹ étant inférieure à 65 % de l'absorption IR intégrale dans la plage de nombre d'onde de 1 000 cm⁻¹ à 1 100 cm⁻¹.

9. Elément réflecteur selon l'une des revendications précédentes,
l'élément réflecteur (6) présentant, dans la plage de longueur d'onde de 420 nm à 480 nm, une réflectivité moyenne R_{blue} et, dans la plage de longueur d'onde de 420 nm à 760 nm, une réflectivité moyenne Rᵥᵢₛ, où ΔR_{vis-blue} = Rᵥᵢₛ - R_{blue} ≤ 1,5 %.

10. Procédé de fabrication d'un élément réflecteur (6), comprenant les étapes suivantes :
- fourniture d'un substrat en plastique (1),
- application d'une couche d'argent (3),
- application d'une première couche barrière (4) par un procédé PVD, la première couche barrière (4) étant une couche d'oxyde d'au moins 15 nm d'épaisseur, et
- application d'une deuxième couche barrière (5), qui comporte un siloxane, par un procédé CVD, la deuxième couche barrière (5) présentant une épaisseur d'au moins 250 nm et d'au plus 450 nm.

11. Procédé selon la revendication 10,
la deuxième couche barrière (5) étant la couche extérieure de l'élément réflecteur (6).

12. Procédé selon la revendication 10 ou 11,
la première couche barrière (4) étant appliquée par un procédé de pulvérisation.

13. Procédé selon l'une des revendications 10 à 12,
la première couche barrière (4) comportant un oxyde d'au moins un des éléments Al, Si, Ti ou Y.

14. Procédé selon l'une des revendications 10 à 13,
la deuxième couche barrière (5) étant réalisée par polymérisation plasma d'un composé de silicium organique.

15. Procédé selon la revendication 14,
le composé de silicium organique étant de l'hexaméthyldisiloxane (HMDSO) ou du tétraméthyldisiloxane (TMDSO).
